# EUROPEAN PATENT SPECIFICATION

(11) **EP 2 533 719 B1**
(45) Date of publication and mention of the grant of the patent: **08.05.2024**
(21) Application number: 11704006.3
(22) Date of filing: 08.02.2011
(51) Int. Cl.: A61C 15/04, D06B 1/08

(54) **METHOD OF PRODUCING A COATED DENTAL FLOSS, AND DENTAL FLOSS**
VERFAHREN ZUR HERSTELLUNG VON BESCHICHTETER ZAHNSEIDE, UND ZAHNSEIDE
PROCEDE DE PRODUCTION D'UN FIL DENTAIRE, ET FIL DENTAIRE

(30) Priority: 08.02.2010 US 302276 P
(43) Date of publication of application: 19.12.2012
(73) Proprietor: The Procter & Gamble Company, Cincinnati, OH 45202 (US)
(72) Inventor: HARDESTY, Douglas, Craig, Amelia, Ohio 45102 (US)
(74) Representative: P&G Patent Germany
(86) International application number: PCT/US2011/024046
(87) International publication number: WO 2011/097623

(56) References cited:
- EP-A1- 2 149 631
- EP-A1- 2 149 632
- WO-A1-99/32046
- WO-A1-2009/132474
- US-A1- 2009 120 454
- US-B2- 6 604 534
- US-B2- 7 398 784

## Description

### FIELD OF THE INVENTION

The present invention is directed to a coated dental floss with more consistent coat weights and methods for its manufacture.

### BACKGROUND OF THE INVENTION

Dental floss is a tool used by many people to help remove debris and plaque from between their teeth. Over the years, floss has developed from a simple uncoated silk fiber, to an uncoated nylon fiber, to coated and uncoated fibers of many varieties. Dental floss can be coated for many reasons, including strengthening of the fiber, adding abrasive material to help with cleaning, and lowering the friction between the fiber and the teeth so that it is easier to use the floss. Coating can be applied as dry powder (WO2009/132474A1) or composition (EP2149631A1, US6,660,453B2) While coating has added many beneficial properties to floss, the ability to consistently coat floss has been difficult to achieve.

Surfaces of monofilament types may be flat or may comprise a plurality of ribs along the length thereof (US2009/0120454A1). Historically, the amount of coating on dental floss is highly variable and inconsistent even if a uniform coating is intended (US7,398,784B2). Often the coat weight on dental floss can vary by upwards of 50% along the floss's length. Due to this extreme variability, manufacturers of dental floss have come to accept they will have inflated costs for making the floss and the properties of the floss won't be consistent. Likewise, manufacturers have accepted floss is a poor vehicle for delivery of those materials which require consistent or limited variations in dosing, for example, actives. In some instances, actives used in oral care are monitored by the Food and Drug Administration (FDA), and in order to claim the benefits associated with having certain actives in the product, the FDA can require the amount of active being delivered is safe and effective within a specified range. Previous attempts to deliver an oral care active on floss have resulted in products with variations above what the FDA will allow, resulting in diminished or eliminated therapeutic benefit claims.

One reason the amount of coating on floss is highly variable is due to the methods currently used to coat floss. For example, one of the current methods used to coat floss is known as the dip method. In the dip method, a grooved roll picks up coating from a pan and the floss fiber is pulled through the groove which contains the coating. As the fiber is pulled through the groove the entire floss fiber is immersed in the coating, resulting in the whole fiber being encased in coating (EP2149632A1). There is no control over the amount of coating which is transferred to the fiber after it is dip coated due to the huge excess of coating to which the fiber is exposed. As such, the amount of coating on a given area of floss coated with this method is extremely variable and can vary as much as 45% to 55% on the floss.

Another example of a method currently used to coat floss fiber is the knife over roll method. In the knife over roll method, a roll picks up coating from a pan. The coating sits on the surface of the roll with some excess being removed by a knife set a specified distance from the coating roll to achieve a desired depth of the coating on the roll. The floss fiber is run across the surface of the roll where it is coated along the entire width of the floss as it picks up coating from the surface of the roll. While this method utilizes the knife to remove some of the excess coating which is above the desired volume set by the knife, there is still a large excess of coating remaining on the coating roll. The knife over roll method also results in a floss fiber which has excess coating vs. the designed level because the coating level is dependent on the width of the fiber used. The amount of coating on a given area of floss for the knife over roll method can also vary as much as 45 to 55% on the final product. Alternatively, a lick roller can be driven to pick up a thin film of the coating which is then transferred to one side of the filament (WO199932046A1) or the coating mixture film is provided by a positive displacement pump (US7,398,784B2) which can be altered later-on by scribing.

Another reason previous attempts to produce a floss with consistent coat weights has been unsuccessful is due to large variations in the width of the floss fiber. While floss fiber is fairly narrow, on average only about 2 mm across, the methods for manufacturing the fibers results in a large variation in the width of the product. The variations in the width of the product can be as much as 35 % along a floss's length. As a result, some portions of the floss are comparatively very wide and some are very narrow. Pulling a wide portion of the floss through coating in a groove or on the surface of a roll will result in a larger pick-up in the amount of coating than pulling a narrower portion of floss through the same groove or over the same roll due at least in part to the difference in surface area. For example, a monofilament floss having a rectangular cross section and a width target of 1.95 mm will have an actual width range of between 1.2 mm and 2.7 mm as allowed in the manufacturing tolerances. The total area of one inch of the target width fiber (1.95 mm) is .08 in². Assuming the dry coat weight target is 450 µg of dry coating per inch of fiber, this yields a target weight of .0081 g per 18 in of fiber. For the portion of the fiber which is 1.2 mm wide, the total area of one inch of fiber is .05 in² resulting in a coat weight of .0050 g/18 in or 61% of the target amount for a variation from the target of about -38%. For the portion of the fiber which is 2.7 mm wide, the area of one inch of fiber is .11 in² resulting in a coat weight of .0112 g/18 in or 138% of the target coat weight for a variation from the target of +38%. In order to calculate the variation from the target, one would use the equation % variation = ((actual amount - target amount)/target amount)* 100).

Therefore, there is a need for a dental floss which has less variation in the coating and for methods relating to producing such floss.

### SUMMARY OF THE INVENTION

A dental floss is provided comprising a fibrous substrate having a rectangular cross-sectional shape having two major surface areas spanning the width of the fibrous substrate and two minor surface areas spanning the height and a coating applied to a surface of the fibrous substrate, characterized in that the coating is applied in the form of a stripe which is continuous across the length of the first and second section of the fibrous substrate and is positioned near the center of a major surface area of the fibrous substrate such that the difference between the dry coat weight on the first section of the fibrous substrate and the dry coat weight on the second section of the fibrous substrate is 1% or less, and obtainable by the method as disclosed herein.

A method of producing dental floss is provided that comprises
a) providing a fibrous substrate having a first section and a second section;
b) applying a coating comprising an active to a surface of the fibrous substrate having a rectangular cross-sectional shape having two major surface areas spanning the width of the fibrous substrate and two minor surface areas spanning the height, characterized in that the coating is applied in the form of a stripe which is continuous across the length of the first and second section of the fibrous substrate and is positioned near the center of a major surface area of the fibrous substrate such that the difference between the dry coat weight on the first section and the dry coat weight on the second section is 1% or less and wherein the coating is applied in a metered amount metered by a pump, and wherein a nozzle is used to apply the coating.

### BRIEF DESCRIPTION OF THE DRAWINGS

FIG. 1 is a perspective view of a coated fiber according to one embodiment of the invention.
FIG. 2 is a perspective view of a coated fiber according to another embodiment of the invention.
FIG. 3 is a perspective view of a coated fiber according to another embodiment of the invention.
FIG. 4 is a perspective view of a coated fiber not according to the invention.
FIG. 5 is a schematic diagram of a process for making floss of the present invention.
FIG. 6 is a schematic diagram of a process for making floss of the present invention.
FIG. 7 is a close-up view of a nozzle used in the present invention.
FIG. 8 is a close-up view of a nozzle used in the present invention.

### DETAILED DESCRIPTION OF THE INVENTION

The present invention is directed to reducing the variability of coating applied to a fibrous substrate used to produce dental floss, allowing for therapeutic drug claims to be made on the dental floss by maintaining low coating variation in large scale production. Additionally, the properties of the more consistently coated floss, like flavor intensity as well as the cost of the floss, are more consistent and predictable. The dental floss of the present invention is comprised of a thin fibrous substrate having properties (strength, dimensions, safety) allowing it to be used in an oral cavity to remove food and plaque from the teeth. The floss is inserted between the teeth and scrapes along the sides of the teeth, especially close to the gums. The fibrous substrate comprising the dental floss of the present invention can be in the form of an individual fiber or in the form of a yarn comprising a plurality of such fibers (multi-fiber yarn); wherein the fibers may be individual distinct fibers, fibers that are partially or completely bonded together, or combinations thereof.

The methods of coating the fibrous substrate and the methods of manufacturing the fibrous substrate contribute to the variability in coat weight. It has now been discovered that by controlling the amount of coating placed on the fibrous substrate, a more consistent coated dental floss is produced. Additionally, by controlling the amount of coating applied to a fibrous substrate, the overall load of coating on the fibrous substrate becomes independent of the width of the fibrous substrate. For example, if 2 mg of coating is applied to a fibrous substrate having a 3mm width and a length of one inch and a fibrous substrate having a width of 1.5 mm and a length of one inch, there is still only 2 mg of coating on each piece. The coating may be a little thinner on the wider piece, but the overall delivery of coating amount will be substantially the same. Thus, both of the factors (1) encasing floss in a coating; (2) varying width of floss, mentioned above which contribute to variability in current floss coatings are minimized or eliminated in the present invention.

Metering is one example of a method that reduces coating variation by controlling the amount of coating applied to a fibrous substrate. In one embodiment, metering is accomplished through the use of a positive displacement pump. A positive displacement pump is one in which fluid is moved by trapping a fixed amount of the fluid and then forcing it into the discharge. Examples of positive displacement pumps include but are not limited to: rotary gear pumps, diaphragm pumps, rotary lobe pumps, planetary pumps, piston pumps, screw pumps, peristaltic pumps, and combinations thereof. The positive displacement pump is used to help set the rate at which the coating will be made available to the fibrous substrate so that each set amount of fibrous substrate will receive the same amount of coating (within manufacturing tolerances).

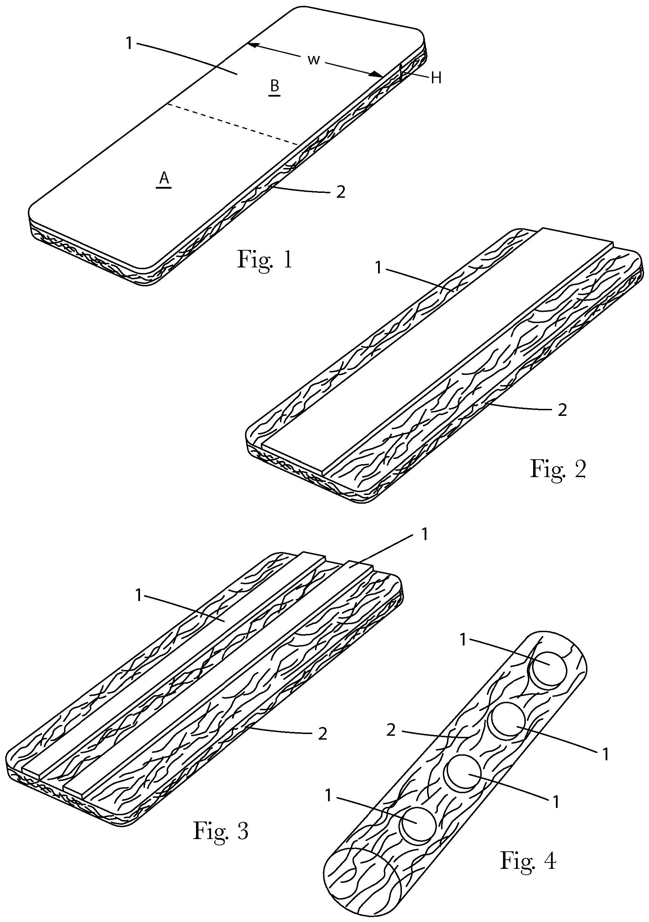

As shown in FIG's 1-3 a coating extends along the length of a fibrous substrate in a substantially unbroken and continuous manner, and across one or more sections, such as shown in FIG. 1 wherein a fibrous substrate 2 has a first section A and a second section B. As illustrated in FIG. 1, the coating 1 can coat an entire surface of the fibrous substrate 2. Additionally, the coating 1 could be placed in the form of a stripe which coats only a portion of the surface of the fibrous substrate 2, as shown in FIG. 2. In one embodiment, the stripe has a substantially uniform width. In another embodiment, the stripe is located near the center of the fibrous substrate surface. The coating 1 could also be in the form of multiple stripes on the fibrous substrate 2, as shown in FIG. 3. In another embodiment, the fibrous substrate is coated on more than one surface. The fibrous substrate being coated may be uncoated or pre-coated prior to application of the coating as discussed herein.

One embodiment not part of the invention is directed to a dental floss comprising a coated fibrous substrate, wherein the difference in the dry coat weight on two or more sections, for example the dry coat weight of a first section of the fibrous substrate and the dry coat weight of a second section of the fibrous substrate, is 30% or less. According to the invention, the difference in the dry coat weight between a first section and a second section is 1%, or less. In addition the coating can comprise an active in varying embodiments, the difference between the dosage of the active on a first section of a fibrous substrate and a second section of a fibrous substrate is about 30%, 25%, 20%, 15%, 12%, 10%, 8%, 6%, 4%, 2%, 1%, or less. In certain embodiments the one or more sections each individually have substantially the same length, for example in certain embodiments a first and second section of a fibrous substrate each have a length of about 5 cm, in certain other embodiments a first and second section of a fibrous substrate each have a length of about 2.5 cm, and in still other embodiments a first and second section of a fibrous substrate each have a length of about 1 cm.

A fibrous substrate in the form of a single fiber may have any suitable cross-sectional shape, for example circular or rectangular. In addition a fiber may be a multi-component fiber such as a bi-component fiber, tri-component fiber, etc. With reference back to FIG. 1 a fibrous substrate 2 having a rectangular cross-section comprises two opposing major surface areas across its width (W) and two opposing minor surface areas across its height (H). A fibrous substrate may have any width and height suitable for use as a dental floss. Generally, the width of a fibrous substrate is from about 0.7 mm to about 3.5 mm. In varying embodiments, the width is from about 1.0 mm to about 3.0 mm; from about 1.5 mm to about 2.5 mm; or from about 1.75 mm to about 2.25 mm. The height of a fibrous substrate in certain embodiments can be from about 0.05 mm to about 1 mm, and in certain other embodiments from about 0.1 mm to about 0.5 mm.

A fiber or a multi-fiber yarn can be made of any material suitable for application in the oral cavity. Some common polymers used to make fibers suitable for the oral cavity include, for example, polytetrafluorethylene (PTFE), nylon, polyether block amide, polypropylene, polyethylene, ultra-high molecular weight polyethylene, and combinations thereof. In certain embodiments, the fibers may comprise expanded PTFE. and the like materials. Combinations of such materials are also acceptable as long as they provide the floss with the strength and fray resistance needed in a dental floss.

The individual fibers comprising a multi-fiber yarn may, if desired, be air entangled. If the yarn is air entangled, the air entanglement nodes may be from about 1.25 cm to about 5.2 cm apart, in certain embodiments from about 2 cm to about 3 cm apart.

A fiber can likewise have any suitable denier. Denier is a measure of mass per unit length and impacts the tensile strength of the fibrous substrate. Generally, the denier of a fibrous substrate used to make dental floss is from about 800 g/9000m to about 2700 g/9000m. In alternate embodiments, the denier is from about 850 g/9000m to about 1600 g/9000m, from about 860 g/9000m to about 1200 g/9000m, or from about 1000 g/9000m to about 1200 g/9000m.

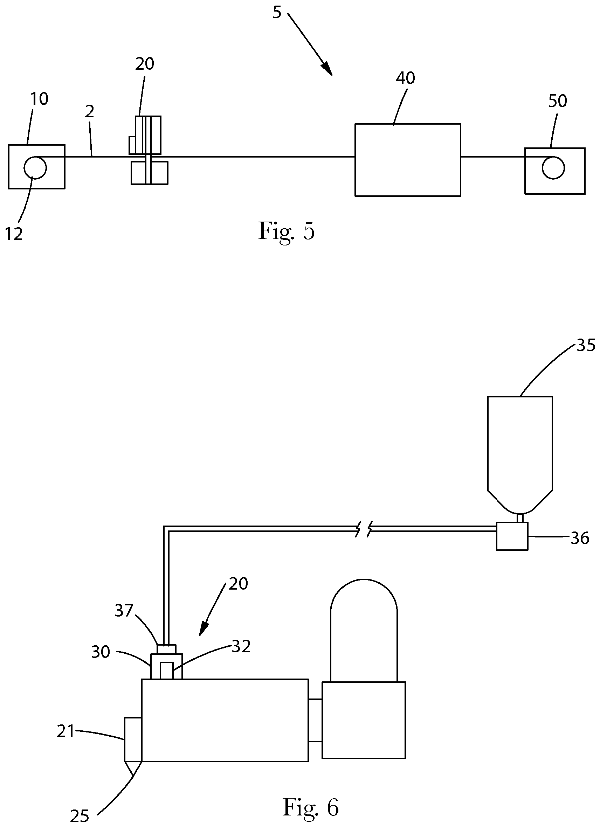

A coating can be applied to a fibrous substrate using one or more of the following methods of the present invention. In certain embodiments, as shown in FIG. 5 a coating system 5 for coating fibrous substrates includes a take-off roller 10, a coating unit 20, a drying unit 40, and a take-up roller 50. The take-off roller 10 holds the fibrous substrate 2 to be coated. The take-off roller 10 can be driven (i.e. uses power) or un-driven. The purpose of the take-off roller 10 is to take large spools 12 of fibrous substrate 2, unwind the spools 12 at a desired rate, and move the unwound fibrous substrate 2 through the coating process. The take-off roller 10 can also have a tension control in order to maintain even tension on the fibrous substrate 2. In certain embodiments the take-off roller 10 is a driven roll, with a brake, capable of removing fibrous substrate between about 100 meters to about 300 meters per minute. The take-off roller 10 may be positioned such that the widest part of the fibrous substrate 2 is exposed to a coating nozzle.

The take-off roller 10 may also be in communication with the take-up roller 50, such that a substantially constant tension is maintained between the two rollers 10, 50. In certain embodiments, the maximum tension between the take-off roller and the take-up roller should not exceed the breaking strength of the fibrous substrate being coated. The maximum tension should be measured at the point after the last contact point before the take up winder. In one embodiment the maximum tension between the take-off roller and the take-up roller is 400 Centi-Newtons. In addition to a maximum tension, a minimum tension should be maintained to ensure that the fibrous substrate does not drag on any of the equipment. In certain embodiments the minimum tension used to keep the fibrous substrate from contacting any of the equipment, such as the bottom of the drying unit can be from about 100 Centi-Newtons to about 350 Centi-Newtons. In certain other embodiments the minimum tension can be from about 200 Centi-Newtons to about 300 Centi-Newtons. One factor affecting the amount of fibrous substrate tension involves the need to change the tension depending on the oven air flow (due to vibration), so if for example if there is higher oven air flow there will be a need for higher tension.

From the take-off roller 10, the fibrous substrate 2 moves to the coating unit 20, as shown in FIG. 5. As shown in FIG. 6, the coating unit 20, which in this embodiment is a metering pump assembly, is in fluid communication with a supply hopper 35 that holds the liquid coating. The supply hopper 35 may be heated, include the ability to mix/agitate the coating, or both. The supply hopper 35 is fluidly connected to the metering pump 30 of the metering pump assembly 20. In certain embodiments the supply hopper can be a 300L vessel that when the liquid coating is an emulsion, mixes the liquid coating to ensure homogeneity of the emulsion. The level of mixing depends on the liquid coating, but should be of a level that maintains homogeneity of the liquid coating throughout the time the liquid coating is drained from the supply hopper for use in coating a fibrous substrate. In certain embodiments at least 1 pitch blade turbine impeller of diameter 15 in is used in a tank of diameter 23 inches for a ratio of 0.64 at an RPM of 48. A substantially constant temperature is maintained for the coating to achieve consistent viscosity of the liquid coating as it is pumped into the coating unit.

At the bottom of the supply hopper 35 a supply pump 36 is used to transfer liquid coating from the supply hopper 35 to the metering pump assembly 20. The supply pump 36 can be of any size or shape that allows it solely to transport the liquid coating to the inlet 37 of the metering pump assembly 20. In certain embodiments the supply pump 36 has a flow rate of about .08 grams/minute and maintains a pressure of about 2-3 Bar. The supply pump maintains a steady supply of coating from the supply tank 36 to the metering pump 30, in the metering pump assembly 20.

The metering pump assembly 20 comprises three major components. The first component is the metering pump 30, which may be a positive displacement pump. A positive displacement pump provides a constant and continuous flow. In certain embodiments a metering pump may be a 12 outlet planetary pump that supplies 12 outlets of equal volume sized at about .6 cc per rpm. In certain other embodiments the metering pump may be a single gear pump that supplies a single stream at about .125 cc per rpm. The metering pump size may be determined by the amount of coating required on the fibrous substrate and the line speed at which the fibrous substrate moves. The metering pump 30 may be attached to a manifold 32. In certain embodiments a manifold 32 is used to direct the flow of liquid coating out of the metering pump 30 to one or more nozzles 25. In certain embodiments a manifold serves as a reservoir of coating liquid used to supply a single gear pump which is then attached directly to the inlet of a nozzle. In certain embodiments the manifold pressure is maintained at about 0.5 bar to about 1.5 bar. The maximum pressure in the manifold should be less that the bypass pressure of the metering pump assembly; so that the pressure is metering the coating liquid and not the metering pump.

The metering pump 30 can be used to meter the amount of coating applied to the fibrous substrate 2. The metering pump 30 controls the amount of coating placed on each defined portion of the fibrous substrate, by pulling only a designated amount of coating into the one or more dispensing modules 21 in fluid communication with the one or more nozzles 25, at a given time (i.e. pump rate). Thus, a more consistently coated fibrous substrate is produced. The liquid coating leaves the metering pump 30 where it is then applied to a fibrous substrate 2 using one or more nozzles 25. A nozzle may contain a flow control valve, such as a needle valve, that allows the application of liquid coating to be stopped when the fibrous substrate is no longer under the nozzle.

The metering pump assembly 20 may be set up to coat one or multiple fibrous substrates at the same time. When multiple fibrous substrates are being coated simultaneously, then each fibrous substrate will run through its own lane on the metering pump assembly 20. Each lane may have its own metering pump 30 or a multiple stream metering pump, such as a planetary gear pump which meters a number of identical volume streams, may be used.

As mentioned above, the metering pump rate is a measurement of the amount of coating that a metering pump will displace per unit time. The amount of coating on a fibrous substrate is directly affected by the rate at which the coating is pushed out of the nozzle, i.e. the metering pump rate. For example, a metering pump rate of 26.043 cubic centimeters (cc) per minute (min) when used to place coating onto a fibrous substrate traveling at 300 meters per minute will give a wet coating weight of about 2250 µg/in. In another example, a pump rate of 7.9 cc/min when used to place coating on a fibrous substrate traveling at 300 m/min will yield a wet coating weight of 682 µg/in.

The rate at which the metering pump is set will depend on several factors. These factors include, for example, the desired coat weight, the viscosity of the coating, the speed at which the fibrous substrate is moving under the nozzle, the volume of the pump per cycle, the temperature of the coating, the size of the nozzle through which the coating flows, the amount of back pressure on the metering pump, and the amount of shear which the metering pump imparts to the coating.

The coat weight is the gravimetric measure of the amount of coating that is placed on a fibrous substrate. The coat weight can be a measurement of the wet coating (after coating before final processing) or of the dried coating (final product - whether dried or not). One way to measure the coat weight on a fibrous substrate is the burn off method. A coated fibrous substrate is placed into a 300° C oven for 15 minutes. Depending on the type of fibrous substrate, the temperature of the oven may need to be adjusted in order to prevent burning the fibrous substrate or an alternative additive weight method could be used. At the end of 15 minutes the fibrous substrate is removed from the oven and weighed (final weight). The coating weight is then calculated by subtracting the final weight of the fibrous substrate from the total weight and multiplying by the appropriate conversion factors for weight and length of the fibrous substrate in order to get the final result in the correct unit of measure (i.e. from g/m to µg/in). For example if the total weight is 1.0958 g/6 meters, and the final weight is 0.7866 g/6 meters. The coat weight would be calculated by the equation: (starting weight - burned weight) * conversion factor. In this example the calculation would be (1.0958-7.866)*4233= 1308.84 micrograms/inch. The conversion factor 4233, converts from g/6 meters to micrograms/inch and is calculated by the equitation: conversion factor = 1000000/(6*39.37).

Another method of measuring the coating weight uses the additive weight test. The additive weight test includes: measuring the denier of the fibrous substrate prior to coating the fibrous substrate, then, once produced, measuring the total weight of the coated fibrous substrate. The difference is the coat weight. The additive weight method could be used, for example, on nylon fiber or PTFE fiber, however, the numbers for PTFE fiber as noted herein are based on the burn off method. The coat weight is generally directly proportional to the pump rate as the faster the pump rate the higher the coat weight.

Another parameter which affects the amount of coating on a fibrous substrate is the line speed. This is the linear speed of the fibrous substrate as it moves through the coating unit. The fibrous substrate may move over, under, or beside the coating orifice of the coating unit depending on the set-up of the coating unit. In many applications, the fibrous substrate will pass under the coating orifice. The line speed is generally controlled by the take-off and take-up rollers. The line speed is used in combination with the pump rate to determine the amount of coating that will be applied to a fibrous substrate.

Unlike the directly proportional relationship between metering pump rate and coat weight, in general, there is an inversely proportional relationship between coat weight and line speed; as such, increasing the line speed while keeping the pump rate constant will result in a reduced coat weight on a fibrous substrate. For example, if the line speed is 300 meters per minute (m/min) and the metering pump rate is 26.04 cc/min, a coat weight of 2250 µg/in will result. If the line speed is increased to 400 m/min at a constant metering pump rate of 26.04 cc/min then a coat weight of 1690 µg/in will result. Conversely, reducing the line speed to 200 m/min at a constant metering pump rate of 26.04 cc/min will result in a coat weight of 3374 µg/in.

Additionally, the viscosity of the coating has an effect on metering pump behavior. An increase in the viscosity of the coating will cause a decrease in the amount of liquid coating pumped at a constant pump rate and therefore the metering pump rate will have to be correspondingly increased to yield the desired coat weight.

As can be seen from above, there are many factors which affect the manufacturing of the end product. These factors are all considered during current manufacturing of floss products to select the proper parameters based on the desired properties of the end product.

As shown in FIG. 6 liquid coating is pumped from the supply hopper 35 through the metering pump 30 to a nozzle 25 which dispenses a metered amount of coating onto the fibrous substrate 2. In certain embodiments, the size of the nozzle 25 is selected so that the coating does not run off of the fibrous substrate 2. The nozzle 25 may be of any variety acceptable for coating a fibrous substrate; for example a slot nozzle. Other examples of nozzles that may be used include an offset nozzle, spray type nozzle, jets nozzle, and extrusion nozzle.

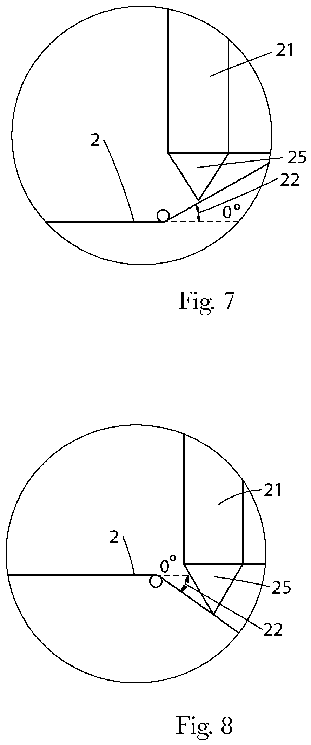

As shown in FIG. 7 and 8, the form of the coating applied to a fibrous substrate 2 from a nozzle 25 will vary based on the type of nozzle 25 and on the fibrous substrate's angle of relief 22 as it passes under the nozzle 25. For example, when using a slot nozzle, if the angle of relief is 0° (i.e. the fibrous substrate is passing horizontally under the nozzle) or greater than 0° (see, for example, FIG. 7) then the coating will cover the width of the fibrous substrate. In one embodiment, the upward angle of relief is from about 0° to about 10°. If, however, the angle of relief is less than 0° (see, for example, FIG. 8) then a slot nozzle will coat the fibrous substrate in the form of a stripe and will cover only a portion of the fibrous substrate surface that passes under the slot nozzle. In certain embodiments, the downward angle of relief is from about 1° to about 10°. In contrast, however, some nozzles will deliver the same form of the coating regardless of the angle of relief. For example, an offset nozzle will coat a fibrous substrate in the form of a stripe regardless of the angle of relief.

With reference back to FIG. 5, once liquid coating has been applied to the fibrous substrate 2, the coated fibrous substrate 2 travels to a drying unit 40, to dry the liquid coating if necessary. The drying unit 40 can be used to remove any excess solvent from the liquid coating. A solvent used in the liquid coating can include, for example, water, alcohol, etc. Some examples of drying systems that can be used include convection, microwave, radio frequency, indirect heat, supercritical, natural air drying, or combinations thereof. The settings of the drying unit will vary based on the desired properties of the dental floss, for instance, percent solvent desired in the dental floss. In certain embodiments, the drying unit may be a convection oven set at between about 35°C and about 70°C with between about 10 and about 40 cubic feet per minute (CFM) air flow across the fibrous substrate for a period of about 1 to 4 seconds. In certain other embodiments the convection oven may be set at between about 45°C and about 65°C or between about 50°C and about 60°C with air flow in the range of about 20 CFM to about 35 CFM or about 25 CFM to about 30 CFM for 1 to 4 seconds. Alternatively, if the coating does not need to be dried it can be cooled (in the case of a heated wax) or made solid in some other manner. Alternatively, if once dried the coating is at an elevated temperature, above the crystallization point of the coating, the coating may be cooled to below the crystallization point. In certain embodiments of the invention a fibrous substrate having a liquid coating is heated in a drying unit comprising an oven having a first heating zone and a second heating zone; wherein the first heating zone has a higher average temperature than the second heating zone. In certain embodiments of an oven having two heating zones, a fibrous substrate having a liquid coating is heated in a 9 m long oven with a first 4.5 m long heating zone and a second 4.5 m long heating zone; wherein the fibrous substrate, which is travelling at about 200 m/min is heated in the first heating zone having a temperature between about 140°C and 155°C and then cooled in the second heating zone of the oven which has a temperature of between about 10°C and about 20°C, with an air flow of between about 20to about 35 CFM.

With further reference to FIG. 5, after drying, cooling, etc., the coated fibrous substrate 2 travels to the take-up roller 50. Here, the coated fibrous substrate is respooled onto larger creels for further processing. This can be done, for example, by precision cross wind, parallel wind, etc.

The coating may comprise one or more compositions that are appropriate for use in the oral cavity; such as natural waxes, artificial waxes which impart grip-ability to the fibrous substrate, natural and artificial flavors which impart pleasant taste to the floss, emulsifiers which help to keep the flavor miscible in the wax portion, artificial sweeteners which impart a sweet flavor to the floss, and other excipients which are present in the oral care coating composition to impart their specific characteristics to the coating such as: increasing or decreasing viscosity, adding color or opacity, or aiding in the cooling or drying process.

A coating may also include one or more actives; for example, anticaries agents, antimicrobial agents, anti-inflammatory agents, antierosion agents, antistain agents, antisensitivity agents, antitartar agents, whitening agents, hydrating agents, bad breath reduction agents, bleaching agents, and combinations thereof. One example of an anticaries agent includes a fluoride ion source. Examples of suitable fluoride ion-yielding materials are found, for example, in U.S. Patent No. 3,535,421 to Briner et al. and U.S. Patent No. 3,678,154 to Widder et al. Representative fluoride ion sources include: stannous fluoride, sodium fluoride, potassium fluoride, amine fluoride, sodium monofluorophosphate, indium fluoride, and many others.

One example of an antimicrobial agent is a quaternary ammonium compound. Dodecyl trimethyl ammonium bromide, tetradecylpyridinium chloride, domiphen bromide, N-tetradecyl-4-ethyl pyridinium chloride, dodecyl dimethyl (2-phenoxyethyl) ammonium bromide, benzyl dimethoylstearyl ammonium chloride, cetylpyridinium chloride, quaternized 5-amino-1,3-bis(2-ethyl-hexyl)-5-methyl hexahydropyrimidine, benzalkonium chloride, benzethonium chloride and methyl benzethonium chloride are exemplary of typical quaternary ammonium antibacterial agents. The present invention may also include other antimicrobial agents including, for example, non-cationic antimicrobial agents such as halogenated diphenyl ethers, phenolic compounds including phenol and its homologs, mono and poly-alkyl and aromatic halophenols, resorcinol and its derivatives, xylitol, bisphenolic compounds and halogenated salicylanilides, benzoic esters, and halogenated carbanilides.

Another active agent includes antitartar agents. One example of an antitartar agent is a polyphosphate. Polyphosphates have two or more phosphate units. An example of a polyphosphate antitartar agent is a pyrophosphate salt as a source of pyrophosphate ion. The pyrophosphate salts useful in the present compositions include, for example, the mono-, di- and tetraalkali metal pyrophosphate salts and combinations thereof. Disodium dihydrogen pyrophosphate (Na₂H₂P₂O₇), sodium acid pyrophosphate, tetrasodium pyrophosphate (Na₄P₂O₇), and tetrapotassium pyrophosphate (K₄P₂O₇) in their unhydrated as well as hydrated forms are further species. In compositions of the present invention, the pyrophosphate salt may be present in one of three ways: predominately dissolved, predominately undissolved, or a combination of dissolved and undissolved pyrophosphate.

An additional example of an active is a bleaching agent. Bleaching agents are generally agents which whiten teeth. Examples of bleaching agents include peroxides, perborates, percarbonates, peroxyacids, persulfates, and combinations thereof. Suitable peroxide compounds include, for example, hydrogen peroxide, urea peroxide, calcium peroxide, sodium peroxide, zinc peroxide, or combinations thereof.

Another active is a bad breath reduction agent. These agents generally work to reduce breath malodor. Examples of bad breath reduction agents include copper salts and carbonyl compounds such as ascorbic acid [3-oxo-L-gulofuranolactone]; cis-jasmone [3-methyl-2-(2-pentenyl-2-cyclopentenone]; 2,5-dimethyl-4-hydroxy-3(2H)-furanone; 5-ethyl-3-hydroxy-4-methyl-2(5H)-furanone; vanillin [4-hydroxy-3-methoxybenzaldehyde]; ethyl vanillin; anisaldehyde [4-methoxybenzaldehyde]; 3,4-methylenedioxybenzaldehyde; 3,4-dimethoxybenzaldehyde; 4-hydroxybenzaldehyde; 2-methoxybenzaldehyde; benzaldehyde; cinnamaldehyde [3-phenyl-2-propenal]; hexyl cinnamaldehyde; α-methyl cinnamaldehyde; ortho-methoxy cinnamaldehyde; or combinations thereof. Without being limited by theory, it is believed some bad breath reduction agents work as "traps" by reacting with the thiol or sulfide and forming products with less odor impact.

Additional active agents include those that can be delivered systemically through the oral cavity.

### EXAMPLES

Dental floss was examined to determine if a consistent amount of coating was applied to differing dental floss samples.

### Example 1 - Slot Die Coating Method

A PTFE fiber having a rectangular cross section and a target width of 1.95 mm was positioned under a slot die coating unit at a linear speed of 300 m/min with a downward relief angle of 3.5 degrees away from the slot die nozzle. A .6 cc/rpm gear pump was used as the metering pump on the slot die system. A liquid coating comprising water, gum Arabic, beeswax, artificial sweetener, an active, and flavor was placed into the slot die coating supply hopper. A meter pump rate target of 13.65 g/min was used. A convection oven was set at 150 °F with 40 cubic feet per minute (CFM) air flow across the PTFE fiber for a period of 2.5 seconds, which resulted in a coating having about 5% residual water. The coat weight target was 2312 µg/min wet and 1850 µg/min dry (wherein the dry product is dried to about 5% residual moisture).

30 samples taken over multiple runs of at least 10,000 meters and over at least 30 days the following coat weights are observed:

**TABLE 1**

| | Dry Coat Weight (5% residual moisture) Micrograms/inch |
|---|---|
| Acceptable Range | 1665.00 to 2035.00 |
| Target | 1850.00 |
| | |

| Samples | |
|---|---|
| 1 | 1868.0 |
| 2 | 1845.2 |
| 3 | 1866.8 |
| 4 | 1846.0 |
| 5 | 1827.2 |
| 6 | 1846.8 |
| 7 | 1867.1 |
| 8 | 1861.5 |
| 9 | 1898.3 |
| 10 | 1804.9 |
| 11 | 1851.0 |
| 12 | 1856.6 |
| 13 | 1853.7 |
| 14 | 1856.9 |
| 15 | 1863.8 |
| 16 | 1861.7 |
| 17 | 1845.0 |
| 18 | 1844.8 |
| 19 | 1818.4 |
| 20 | 1838.1 |
| 21 | 1827.1 |
| 22 | 1867.4 |
| 23 | 1877.4 |
| 24 | 1822.8 |
| 25 | 1839.3 |
| 26 | 1861.4 |
| 27 | 1836.0 |
| 28 | 1870.1 |
| 29 | 1828.0 |
| 30 | 1819.5 |
| est. mean | 1849.03 |
| est. SD | 20.45 |
| Cpk Upper | 1.515 |
| Cpk Lower | 1.500 |
| Cpk* | 1.500 |

| | |
|---|---|
| *Cpk is calculated via the equation: Cpk = min[(USL-µ)/3σ),( µ-LSL)/3 σ), where USL is the Upper Specification Limit, LSL is the Lower Specification Limit, µ is the mean and σ is the standard deviation. The Target for Cpk is >1.33. | |

The results in TABLE 1 show that the methods of the present invention apply a consistent amount of coating to dental floss. Measuring the coating weights of 30 PTFE fiber samples, each produced during separate production runs, but using the same method of production as described above, showed that there was little deviation among the samples. The samples had a standard of deviation of 20.45 µg/in, which is about 1% of the mean; meaning that 99.8% of the dental floss produced is within +/- 5% of the mean. The results also show that the target coating weight of 1850 µg/in was achieved, as the mean of all 30 samples was 1849.03 µg/in. The results demonstrate the methods of the present invention apply a desired amount of coating to a dental floss in a consistent manner.

### Example 2 - Roll Coating Method

A PTFE fiber having a rectangular cross section and a target width of 1.95 mm was also used for the roll coating process. The roll coating process used a 12 in diameter roll coater, revolving at 29 rpm over the PTFE fiber moving at 300 ft per minute. A knife was set at .17 thousandths of an inch to doctor the amount of coating on the roll. The PTFE fiber contacted the roll at a 90 degree angle on the bottom of the roll. The PTFE fiber was then passed through an RF oven to dry the coating to residual 5% moisture. The same liquid coating used for the samples in Example 1 was used to coat the roll, and comprised water, gum Arabic, beeswax, artificial sweetener, an active, and flavor. The coat weight target was 514 µg/in wet and 415 µg/in dry (wherein the dry product is dried to about 5% residual moisture).

30 samples taken over multiple runs of at least 10,000 meters and over at least 30 days the following coat weights are observed:

**TABLE 2**

| | Dry Coat Weight (5% residual moisture) Micrograms/inch |
|---|---|
| Acceptable Range | 200 to 600 |
| Target | 415 |
| | |

| Samples | |
|---|---|
| 1 | 472.4 |
| 2 | 399.7 |
| 3 | 468.7 |
| 4 | 402.3 |
| 5 | 342.3 |
| 6 | 404.9 |
| 7 | 469.8 |
| 8 | 451.8 |
| 9 | 569.3 |
| 10 | 271.0 |
| 11 | 418.3 |
| 12 | 436.0 |
| 13 | 426.9 |
| 14 | 437.1 |
| 15 | 459.0 |
| 16 | 452.4 |
| 17 | 399.0 |
| 18 | 398.5 |
| 19 | 314.1 |
| 20 | 377.0 |
| 21 | 341.9 |
| 22 | 470.6 |
| 23 | 502.4 |
| 24 | 328.1 |
| 25 | 380.7 |
| 26 | 451.5 |
| 27 | 370.3 |
| 28 | 479.4 |
| 29 | 344.7 |
| 30 | 317.6 |
| est. mean | 411.91 |
| est. SD | 65.35 |
| Cpk Upper | 0.959 |
| Cpk Lower | 1.081 |
| Cpk* | 0.959 |

The results in TABLE 2 show that in contrast to the present invention (results in TABLE 1) the roll coating method of applying coating to the PTFE fiber results in a large variation in the coating amounts between samples. The samples had a standard of deviation of 65.35 µg/in, which is 45% of the mean (as compared to 1% for the present invention, as shown in TABLE 1); meaning there were significant variations in the coating amount between the individual samples.

The results demonstrate that the present invention provides a more consistent coating amount to dental floss, than the methods of the prior art, such as roll coating

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm."

## Claims

1. A method of producing dental floss comprising:
a. providing a fibrous substrate (2) having a first section (A) and a second section (B);
b. applying a coating (1) comprising an active to a surface of the fibrous substrate (2) having a rectangular cross-sectional shape having two major surface areas spanning the width (W) of the fibrous substrate (2) and two minor surface areas spanning the height (H), **characterized in that** the coating (1) is applied in the form of a stripe which is continuous across the length of the first and second section (A, B) of the fibrous substrate (2) and is positioned near the center of a major surface area of the fibrous substrate (2) such that the difference between the dry coat weight on the first section (A) and the dry coat weight on the second section (B) is 1% or less and wherein the coating (1) is applied in a metered amount metered by a pump (30), and wherein a nozzle (25) is used to apply the coating (1).

2. The method of claim 1, wherein the stripe has a substantially uniform width.

3. The method of any of claims 1 to 2, wherein the first and second sections (A, B) have the same length.

4. The method of any of claims 1 to 3, wherein the nozzle (25) is a slot nozzle.

5. The method of any of claims 1 to 4, wherein the fibrous substrate (2) is passed under the nozzle (25) at a downward angle.

6. The method of claim 5, wherein the downward angle is from 1° to 10°.

7. The method of any of claims 1 to 6, wherein the fibrous substrate (2) is coated on more than one surface.

8. A dental floss comprising a fibrous substrate (2) having a rectangular cross-sectional shape having two major surface areas spanning the width (W) of the fibrous substrate (2) and two minor surface areas spanning the height (H) and a coating (1) applied to a surface of the fibrous substrate (2), **characterized in that** the coating (1) is applied in the form of a stripe which is continuous across the length of the first and second section (A, B) of the fibrous substrate (2) and is positioned near the center of a major surface area of the fibrous substrate (2) such that the difference between the dry coat weight on the first section (A) and the dry coat weight on the second section (B) is 1% or less, and obtainable by the method of any of claims 1 to 7.

9. The dental floss of claim 8, wherein the width of the dental floss is between about 0.7 mm and about 3.5 mm.

10. The dental floss of claims 8 or 9, wherein the height of the fibrous substrate is from 0.05 mm to 1 mm.

## Patentansprüche

1. Verfahren zum Herstellen von Zahnseide, umfassend:
a. Bereitstellen eines faserhaltigen Substrats (2) mit einem ersten Abschnitt (A) und einem zweiten Abschnitt (B);
b. Aufbringen einer Beschichtung (1), die einen Wirkstoff umfasst, auf eine Oberfläche des faserhaltigen Substrats (2), das eine rechteckige Querschnittsform mit zwei Hauptoberflächenbereichen, die sich über die Breite (W) des faserhaltigen Substrats (2) erstrecken, und zwei Nebenoberflächenbereichen, die sich über die Höhe (H) erstrecken, aufweist, **dadurch gekennzeichnet, dass** die Beschichtung (1) in Form eines Streifens aufgebracht wird, der über die Länge des ersten und zweiten Abschnitts (A, B) des faserhaltigen Substrats (2) ununterbrochen ist und in der Nähe des Zentrums eines Hauptoberflächenbereichs des faserhaltigen Substrats (2) angeordnet ist, so dass der Unterschied zwischen dem Trockenbeschichtungsgewicht auf dem ersten Abschnitt (A) und dem Trockenbeschichtungsgewicht auf dem zweiten Abschnitt (B) 1 % oder weniger beträgt, und wobei die Beschichtung (1) in einer dosierten Menge aufgetragen wird, die durch eine Pumpe (30) dosiert wird, und wobei eine Düse (25) zum Auftragen der Beschichtung (1) verwendet wird.

2. Verfahren nach Anspruch 1, wobei der Streifen eine im Wesentlichen einheitliche Breite aufweist.

3. Verfahren nach einem der Ansprüche 1 bis 2, wobei der erste und der zweite Abschnitt (A, B) die gleiche Länge aufweisen.

4. Verfahren nach einem der Ansprüche 1 bis 3, wobei die Düse (25) eine Schlitzdüse ist.

5. Verfahren nach einem der Ansprüche 1 bis 4, wobei das faserhaltige Substrat (2) unter der Düse (25) in einem Abwärtswinkel geführt wird.

6. Verfahren nach Anspruch 5, wobei der Abwärtswinkel von 1° bis 10° beträgt.

7. Verfahren nach einem der Ansprüche 1 bis 6, wobei das faserhaltige Substrat (2) auf mehr als einer Oberfläche beschichtet ist.

8. Zahnseide, umfassend ein faserhaltiges Substrat (2), das eine rechteckige Querschnittsform mit zwei Hauptoberflächenbereichen, die sich über die Breite (W) des faserhaltigen Substrats (2) erstrecken, und zwei Nebenoberflächenbereichen, die sich über die Höhe (H) erstrecken und eine Beschichtung (1), die auf eine Oberfläche des faserhaltigen Substrats (2) aufgebracht wird, aufweist, **dadurch gekennzeichnet, dass** die Beschichtung (1) in Form eines Streifens aufgebracht wird, der über die Länge des ersten und zweiten Abschnitts (A, B) des faserhaltigen Substrats (2) ununterbrochen ist und in der Nähe des Zentrums eines Hauptoberflächenbereichs des faserhaltigen Substrats (2) angeordnet ist, so dass der Unterschied zwischen dem Trockenbeschichtungsgewicht auf dem ersten Abschnitt (A) und dem Trockenbeschichtungsgewicht auf dem zweiten Abschnitt (B) 1 % oder weniger beträgt, und nach dem Verfahren nach einem der Ansprüche 1 bis 7 erhaltbar ist.

9. Zahnseide nach Anspruch 8, wobei die Breite der Zahnseide zwischen etwa 0,7 mm und etwa 3,5 mm liegt.

10. Zahnseide nach Anspruch 8 oder 9, wobei die Höhe des faserhaltigen Substrats von 0,05 mm bis 1 mm beträgt.

## Revendications

1. Procédé de production de fil dentaire comprenant :
a. la fourniture d'un substrat fibreux (2) ayant une première section (A) et une seconde section (B) ;
b. l'application d'un revêtement (1) comprenant un actif sur une surface du substrat fibreux (2) ayant une forme rectangulaire en coupe transversale ayant deux surfaces principales couvrant la largeur (W) du substrat fibreux (2) et deux surfaces mineures couvrant la hauteur (H), **caractérisé en ce que** le revêtement (1) est appliqué sous la forme d'une bande qui est continue sur toute la longueur de la première et de la seconde section (A, B) du substrat fibreux (2) et est positionné près du centre d'une surface principale du substrat fibreux (2) de telle sorte que la différence entre le poids de revêtement sec sur la première section (A) et le poids de revêtement sec sur la seconde section (B) est de 1 % ou moins et dans lequel le revêtement (1) est appliqué en une quantité dosée, dosée par une pompe (30), et dans lequel une buse (25) est utilisée pour appliquer le revêtement (1).

2. Procédé selon la revendication 1, dans lequel la bande a une largeur sensiblement uniforme.

3. Procédé selon l'une quelconque des revendications 1 à 2, dans lequel les première et seconde sections (A, B) ont la même longueur.

4. Procédé selon l'une quelconque des revendications 1 à 3, dans lequel la buse (25) est une buse à fente.

5. Procédé selon l'une quelconque des revendications 1 à 4, dans lequel le substrat fibreux (2) est amené à passer sous la buse (25) à un angle descendant.

6. Procédé selon la revendication 5, dans lequel l'angle descendant va de 1° à 10°.

7. Procédé selon l'une quelconque des revendications 1 à 6, dans lequel le substrat fibreux (2) est revêtu sur plus d'une surface.

8. Fil dentaire comprenant un substrat fibreux (2) ayant une forme rectangulaire en coupe transversale ayant deux surfaces principales couvrant la largeur (W) du substrat fibreux (2) et deux surfaces mineures couvrant la hauteur (H) et un revêtement (1) appliqué sur une surface du substrat fibreux (2), **caractérisé en ce que** le revêtement (1) est appliqué sous la forme d'une bande qui est continue sur toute la longueur des première et seconde sections (A, B) du substrat fibreux (2) et est positionné près du centre d'une surface principale du substrat fibreux (2) de telle sorte que la différence entre le poids de revêtement sec sur la première section (A) et le poids de revêtement sec sur la seconde section (B) est de 1 % ou moins, et pouvant être obtenu par le procédé selon l'une quelconque des revendications 1 à 7.

9. Fil dentaire selon la revendication 8, dans lequel la largeur du fil dentaire est comprise entre environ 0,7 mm et environ 3,5 mm.

10. Fil dentaire selon les revendications 8 ou 9, dans lequel la hauteur du substrat fibreux va de 0,05 mm à 1 mm.
